(19) Europäisches Patentamt

European Patent Office

Office européen des brevets

(11) **EP 1 275 410 A2**

(12) **EUROPEAN PATENT APPLICATION**

(43) Date of publication:
**15.01.2003 Bulletin 2003/03**

(51) Int Cl.⁷: **A61M 5/165**

(21) Application number: **02078995.4**

(22) Date of filing: **20.12.1994**

(84) Designated Contracting States:
**BE DE FR GB IT**

(30) Priority: **22.12.1993 US 172138**

(62) Document number(s) of the earlier application(s) in accordance with Art. 76 EPC:
**95906087.2 / 0 684 864**

(71) Applicant: **BAXTER INTERNATIONAL INC.**
**Deerfield, Illinois 60015 (US)**

(72) Inventors:
 • **Sternberg, Shmuel**
  **Northbrook, Illinois 60062 (US)**
 • **Wons, Allen R.**
  **Antioch, Illinois 6002 (US)**
 • **Fisher, David P.**
  **Antioch, Illinois 6002 (US)**
 • **Lynn, Daniel R.**
  **Spring Grove, Illinois 60081 (US)**
 • **Minshall, Billy W.**
  **Mill Creek, Washington 98012 (US)**

(74) Representative: **Dee, Ian Mark et al**
  **Eric Potter Clarkson,**
  **Park View House,**
  **58 The Ropewalk**
  **Nottingham NG1 5DD (GB)**

Remarks:
 This application was filed on 17 - 09 - 2002 as a divisional application to the application mentioned under INID code 62.

(54) **A blood filter**

(57) In a method for processing audio signals composed audio signals (L+R) and (L-R) are derived from left (L) and right (R) audio signals. The energy content of the composed (L-R) audio signals above a predetermined frequency value is measured and compared with a predetermined threshold value. Then, when this energy content falls below said threshold value, a signal derived from and decorrelated with respect to the composed (L+R) audio signal is added to the composed (L-R) signal to obtain an improved composed (L-R) audio signal, and left (L) and right(R) audio signals are obtained back again from the composed (L+R) signal and the improved composed (L-R) audio signal.

FIG.2

**Description**

The invention relates to a method for processing audio signals and to an audio processing system for applying this method.

Audio signals may be transmitted electronically, for example, over Internet. The audio signals may be transmitted in a compressed form, for example, MP3, MP3Pro, WMA or Real Audio format, for reasons of reduced need of transmission bandwidth. The compression factor may be variable, leading to a variety of audio signal stream bit rates, for example from 16 kbit/s up to 196kbit/s and sample frequencies from 8 kHz up to 48 kHz. In many cases, the decoded audio signals are not perceptually identical to the source material. Typically, for lower bit rates, such as the widely used standard 128 kbit/s, is that artifacts are becoming audible. Lower bit rates, such as 64 kbit/s show considerable artifacts. Artifacts may occur in correlated signals (M signals) and uncorrelated signals (S signals). The correlated signals typically show a reduced bandwidth, for example to 10 kHz and thus loss of detail in the treble region (the high frequency region), while uncorrelated signals show serious irregular dropouts (loss of bits) above 1 kHz. These dropouts are responsible for an unstable stereo-image and apparent spurious sounds in the complete (stereo) soundstage.

The purpose of the invention is to avoid these disadvantages and to provide for a method for processing audio signals and for an audio processing system in which compensation for the consequences of dropouts in the soundstage is realized.

Therefore, according to the invention, a method for processing audio signals is proposed in which from left (L) and right (R) audio signals composed audio signals (L+R) and (L-R) are derived, the energy content of the composed (L-R) audio signals above a predetermined frequency value is measured, this energy content is compared with a predetermined threshold value, after which, when this energy content falls below said threshold value, a signal derived from and decorrelated with respect to the composed (L+R) audio signal is added to the composed (L-R) signal to obtain an improved composed (L-R) audio signal, and left (L) and right(R) audio signals are obtained back again from the composed (L+R) signal and the improved composed (L-R) audio signal. This means, that part of the composed (L-R) signal, lost by dropouts, is compensated by part of the composed (L+R) signal.

As already indicated, the invention also relates to an audio processing system. According to the invention this audio processing system is provided with first combination means to derive from left (L) and right (R) audio signals composed audio signals (L+R) and (L-R), detection and comparing means to measure the energy content of the composed (L-R) audio signals above a predetermined frequency value and to compare this energy content with a predetermined threshold value, second combining means to derive, when this energy content falls below said threshold value, an improved composed (L-R) audio signal from a signal obtained from and decorrelated with respect to the composed (L+R) audio signal and the composed (L-R) signal, and third combining means to obtain back again left (L) and right (R) audio signals from the composed (L+R) signal and the improved composed (L-R) audio signal.

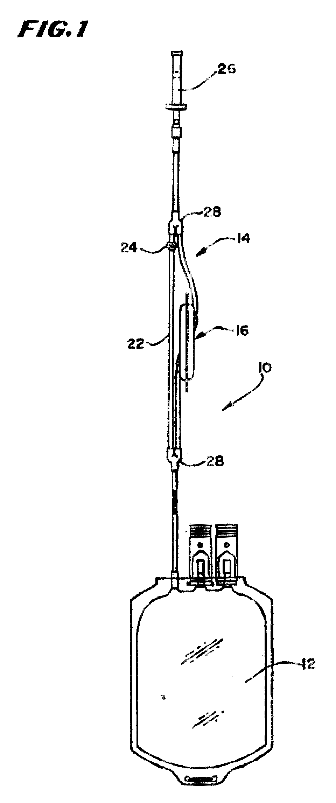

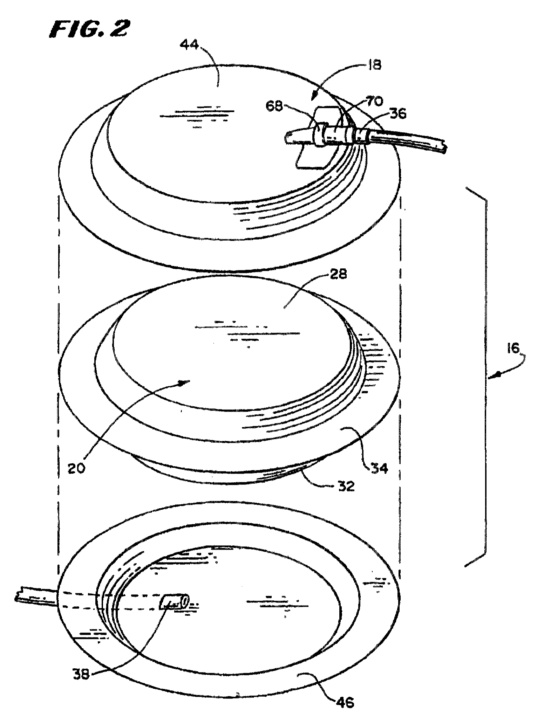

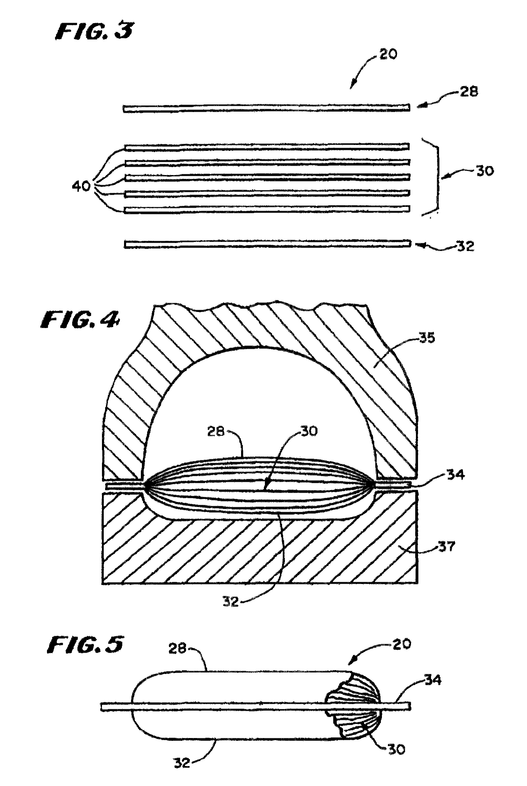

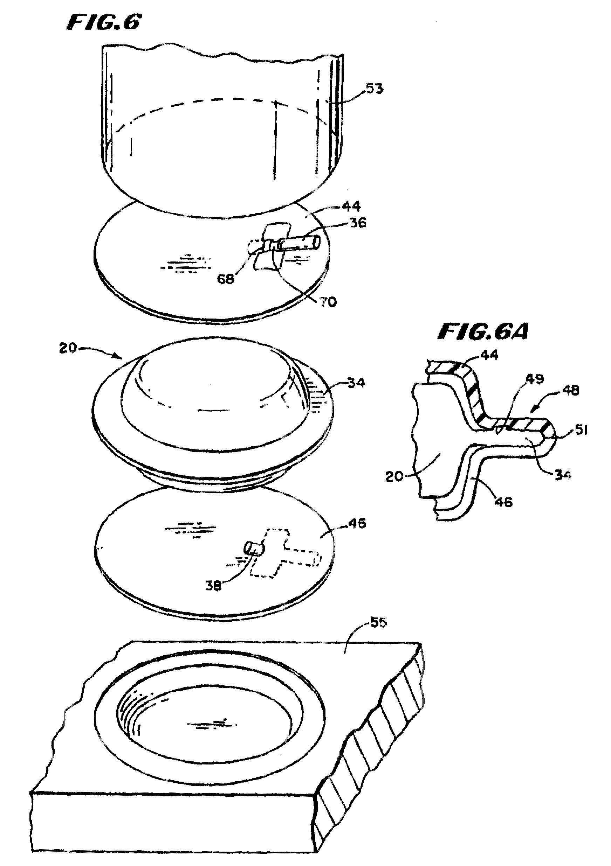

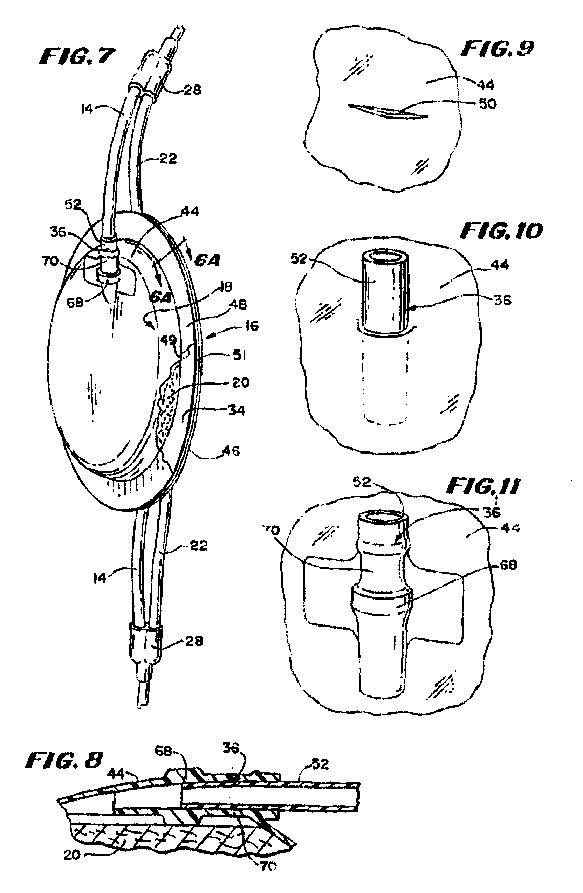

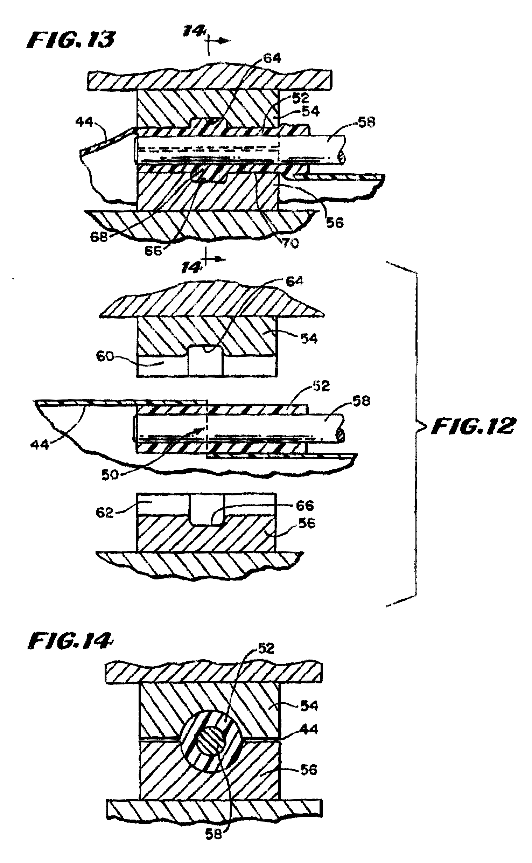

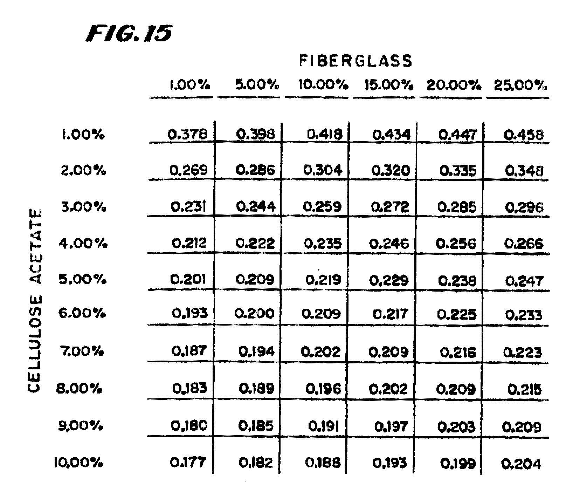

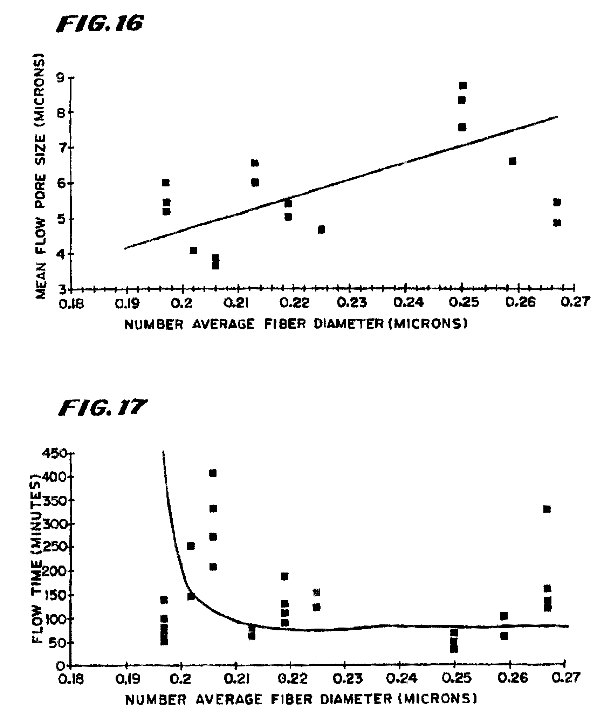

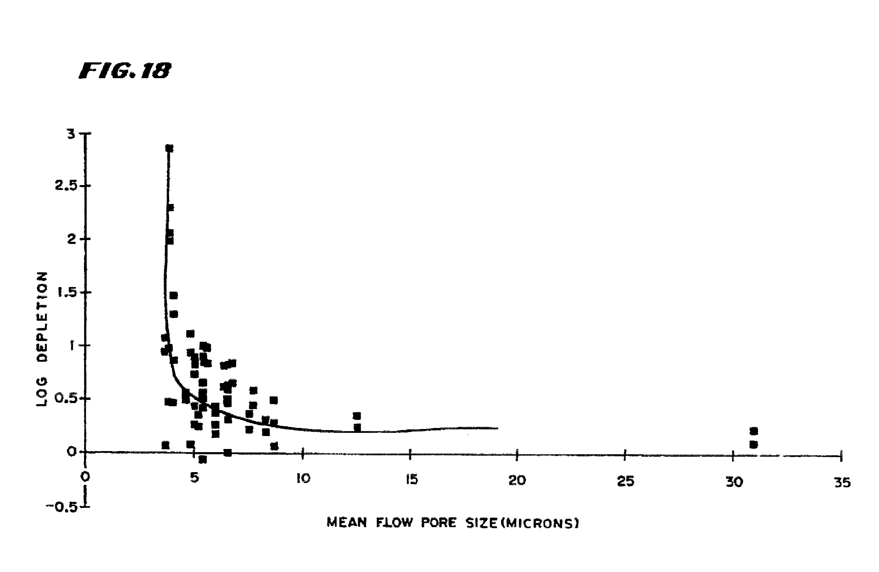

The invention will be apparent from and elucidated with reference to the example as described in the following and to the accompanying drawing. In this drawing a figure is depicted showing an embodiment of an audio processing system according to the invention.

The figure shows first combination means 1 and 2 to derive from left (L) and right (R) audio signals composed audio signals (L+R) and (L-R).

The composed (L-R) audio signal is supplied to detection and comparing means 3 to measure the energy content of the composed (L-R) audio signals above a predetermined frequency value and to compare this energy content with a predetermined threshold value. To realize this, the detection and comparing means 3 comprise a filter 4 in the form of a $2^{nd}$ order Butterworth high pass filter with a cut-off frequency of about 3 kHz, energy measuring means 5 to detect the energy content of the filtered composed (L-R) audio signal, and a comparator 6 to indicate whether or not the measured energy content is above said predetermined threshold value. The comparator 6 supplies a control signal P to switching means 7. P = 0 if the measured energy content is above the threshold value, while P = 1 if the measured energy content is above that value.

The composed (L+R) audio signal is supplied to means 8 comprising a delay element 9 and band pass filter means formed by a high pass $4^{th}$ order Butterworth filter 10 with a cut-off frequency of about 1 kHz and a low pass $1^{st}$ order Butterworth filter 11 with a cut-off frequency of about 6 kHz, to obtain a high frequency signal $L_{hd} + R_{hd}$ which is decorrelated with respect to the composed (L+R) input audio signal. This high frequency signal $L_{hd} + R_{hd}$ is supplied to the switching means 7 and, if P = 1, further supplied to second combination means 12 and therein to the composed (L-R) audio signal. The output of the second combination means 12 forms an improved composed (L-R) audio signal.

The composed (L+R) audio signal and the output signal of the second combination means, i.e. the composed (L-R) signal if P = 0 or the improved composed (L-R) audio signal if P = 1, are supplied to third combination means 13 and 14 to obtain left and right signals L' and R' back again. These signals L' and R' can, for example, be supplied to loudspeakers.

The operation of the audio processing system is as follows:

- In case the output signal of the energy measuring means 5 is above the predetermined threshold value, i.e. P = 0, L' = 2L and R' = 2R.

- In case the output signal of the energy measuring means 5 is below the predetermined threshold value, and the measurements according to the invention are not applied, then for low frequencies, these are frequencies below 1 kHz, L' and R' can be described by the following equations:

$$L'_l = (L_l + R_l) + (L_l - R_l) = 2L_l,$$

and

$$R'_l = (L_l + R_l) - (L_l - R_l) = 2R_l,$$

wherein the index 1 relates to the low frequencies (< 1 kHz), while for low high frequencies, these are frequencies above 1 kHz, L' and R' can be described by the following equations:

$$L'_h = (L_h + R_h) + 0 = (L_h + R_h),$$

and

$$R'_h = (L_h + R_h) - 0 = (L_h + R_h),$$

wherein the index h relates to the high frequencies (> 1 kHz), so that:

$$L' = 2L_l + (L_h + R_h),$$

and

$$R' = 2R_l + (L_h + R_h).$$

The high frequency signals are reproduced monophonically or, in other words, as a consequence of dropouts the stereo signal is narrower than before encoding.

- In case the output signal of the energy measuring means 5 is below the predetermined threshold value and the measurements according to the invention are applied, then for the low frequencies, L' and R' can be described by the following equations:

$$L'_l = 2L_l$$

and

$$R'_l = 2R_l,$$

while for the high frequencies L' and R' are described by:

$$L'_h = (L_h + R_h) + (L_{hd} + R_{hd}),$$

and

$$R'_h = (L_h + R_h) - (L_{hd} + R_{hd}),$$

so that:

$$L' = 2L_l + (L_h + R_h) + (L_{hd} + R_{hd}),$$

and

$$R' = 2R_l + (L_h + R_h) - (L_{hd} + R_{hd}).$$

The high frequency signals are now reproduced as stereophonically or, in other words, in spite of dropouts, the stereo quality is substantially maintained.

The invention is not restricted to the described embodiment; modifications within the scope of the following claims are possible. Particularly, the filters can be chosen differently, while some variation in the cut-off frequencies may be possible. Instead of a delay element a Lauridsen decorrelator or some combfilter can be used to create a decorrelated signal to be supplied to the switching means 7. Furthermore, it may be noted that, when the stereo signals L', R' are applied as input signals for a more complex surround sound reproduction, using, for example, a 2-to-5 decoder, the artifacts will be more serious. The application of the present invention will then be more important.

## Claims

1.  Method for processing audio signals in which from left and right audio signals composed audio signals and are derived, the energy content of the composed audio signals above a predetermined frequency value is measured, this energy content is compared with a predetermined threshold value, after which, when this energy content falls below said threshold value, a signal derived from and decorrelated with respect to the composed audio signal is added to the composed signal to obtain an improved composed audio signal, and left and right audio signals are obtained back again from the composed signal and the improved composed audio signal.

2.  Method according to claim 1, **characterized in that** the decorrelated signal is obtained by delaying and filtering the composed signal.

3.  Audio processing system with first combination means to derive from left and right audio signals composed audio signals and, detection and comparing means to measure the energy content of the composed audio signals above a predetermined frequency value and to compare this energy content with a predetermined threshold value, second combining means to derive, when this energy content falls below said threshold value, an improved composed audio signal from a signal obtained from and decorrelated with respect to the composed audio signal and the composed signal, and third combining means to obtain back again left and right audio signals from the composed signal and the improved composed audio signal.

4. Audio processing system according to claim 3, **characterized in that** the detection and comparing means comprise a high pass filter, energy measuring means to detect the energy content of the filtered composed audio signal, and a comparator to indicate whether or not the measured energy content is above said predetermined threshold value.

5. Audio processing system according to claim 4, **characterized in that** the high pass filter has a cut-off frequency of about 3 kHz.

6. Audio processing system according to anyone of the claims 3-5, **characterized in that** means are provided comprising a delay element and band pass filter means to derive said improved composed audio signal from the composed audio signal.

7. Audio processing means according to claim 6, **characterized in that** the band pass filter means are formed by a high pass filter with a cut-off frequency of about 1 kHz and a low pass filter with a cut-off frequency of about 6 kHz.

**FIG.1**

FIG. 2

*FIG. 3*

*FIG. 4*

*FIG. 5*

**FIG.6**

**FIG.6A**

FIG.7

FIG.9

FIG.10

FIG.11

FIG.8

EP 1 275 410 A2

FIG.13

FIG.12

FIG.14

10

## FIG. 15

|  |  | FIBERGLASS | | | | | |
|---|---|---|---|---|---|---|---|
|  |  | 1.00% | 5.00% | 10.00% | 15.00% | 20.00% | 25.00% |
| | 1.00% | 0.378 | 0.398 | 0.418 | 0.434 | 0.447 | 0.458 |
| | 2.00% | 0.269 | 0.286 | 0.304 | 0.320 | 0.335 | 0.348 |
| | 3.00% | 0.231 | 0.244 | 0.259 | 0.272 | 0.285 | 0.296 |
| CELLULOSE ACETATE | 4.00% | 0.212 | 0.222 | 0.235 | 0.246 | 0.256 | 0.266 |
| | 5.00% | 0.201 | 0.209 | 0.219 | 0.229 | 0.238 | 0.247 |
| | 6.00% | 0.193 | 0.200 | 0.209 | 0.217 | 0.225 | 0.233 |
| | 7.00% | 0.187 | 0.194 | 0.202 | 0.209 | 0.216 | 0.223 |
| | 8.00% | 0.183 | 0.189 | 0.196 | 0.202 | 0.209 | 0.215 |
| | 9.00% | 0.180 | 0.185 | 0.191 | 0.197 | 0.203 | 0.209 |
| | 10.00% | 0.177 | 0.182 | 0.188 | 0.193 | 0.199 | 0.204 |

*FIG.16*

*FIG.17*

FIG.18